# EUROPEAN PATENT APPLICATION

(11) **EP 4 582 305 A1**
(43) Date of publication of application: **09.07.2025**
(21) Application number: 23859195.2
(22) Date of filing: 21.08.2023
(51) Int. Cl.: B60L 58/26, B60L 58/12

(54) **BATTERY PREPROCESSING CONTROL METHOD AND APPARATUS, AND VEHICLE**

(30) Priority: 31.08.2022 CN 202211063596
(71) Applicant: Great Wall Motor Company Limited, Baoding, Hebei 071000 (CN)
(72) Inventor: WANG, Ju, Baoding, Hebei 071000 (CN)
(74) Representative: Klunker IP Patentanwälte PartG mbB
(86) International application number: PCT/CN2023/114052
(87) International publication number: WO 2024/046161

(57) **Abstract**

The present disclosure provides a battery preprocessing control method and apparatus, and a vehicle. The method includes: upon receiving a battery preprocessing function trigger instruction, determining a plurality of first charging durations corresponding to different candidate temperatures to which a battery is preprocessed, and determining a second charging corresponding to no preprocessing; selecting the candidate temperatures satisfying a condition; determining a target temperature based on selected candidate temperatures; and preprocessing, based on the target temperature, the battery in response to the battery preprocessing function trigger instruction to reduce temperature of the battery to the target temperature before reaching a charging station. According to the present disclosure, when the battery preprocessing function trigger instruction is received, the target temperature is determined and the battery is cooled before reaching the charging station, so that the battery is cooled to the target temperature before reaching the charging station. Thus, problems of low charging efficiency and increased charging time caused by inability to dissipate residual heat completely caused by high temperature of the battery may be avoided.

## Description

### TECHNICAL FIELD

The present disclosure relates to the field of vehicle technologies, and in particular, to a battery preprocessing control method and apparatus, and a vehicle.

### BACKGROUND

Since batteries generate heat during both charging and discharging processes, a corresponding cooling system is required to cool the batteries and maintain their operating temperature. However, in high ambient temperature conditions, if the vehicle's power consumption is also high, the temperature of the battery may become excessively high. During the charging process, residual heat generated by a battery pack cannot be fully dissipated, resulting in a reduction in charging power, low charging efficiency, and increased charging time for the battery.

### SUMMARY

In view of this, the present disclosure aims to propose a battery preprocessing control method and apparatus, and a vehicle to address a problem of low charging efficiency and increased charging time caused by inability to dissipate residual heat during battery charging in high ambient temperature conditions.

To achieve the aforementioned objectives, technical solutions of the present disclosure are implemented as follows.

A battery preprocessing control method, includes: upon receiving a battery preprocessing function trigger instruction, determining a plurality of first charging durations corresponding to different candidate temperatures to which a battery is preprocessed, and determining a second charging duration corresponding to no preprocessing, where each of the plurality of first charging durations is a charging duration required after cooling the battery to a corresponding candidate temperature; selecting candidate temperatures satisfying a condition, where the satisfying the condition represents the first charging duration corresponding to the candidate temperature being less than the second charging duration; determining a target temperature based on the selected candidate temperatures; and preprocessing, based on the target temperature, the battery in response to the battery preprocessing function trigger instruction to reduce temperature of the battery to the target temperature before reaching a charging station.

Furthermore, the determining a plurality of first charging durations corresponding to different candidate temperatures to which a battery is preprocessed includes: acquiring a plurality of candidate temperatures from a preset temperature range, and performing following processes for each of the plurality of candidate temperatures: determining additional energy consumption corresponding to the candidate temperature based on the candidate temperature, discharge power of the battery, driving energy consumption rate of a vehicle, and ambient temperature; determining a first required charging energy for the battery based on the additional energy consumption, current capacity of the battery, and maximum capacity of the battery; and determining the first charging duration corresponding to the candidate temperature based on the first required charging energy and charging station parameters, where the charging station parameters include: location of the charging station and charging power of the charging station.

Furthermore, the determining a second charging duration corresponding to no preprocessing includes: determining a second required charging energy for the battery based on current capacity of the battery, and maximum capacity of the battery; and determining the second charging duration corresponding to no preprocessing based on the second required charging energy and charging station parameters, where the charging station parameters include: location of the charging station and charging power of the charging station.

Furthermore, the determining a target temperature based on the selected candidate temperatures includes: determining a time reduction and the additional energy consumption corresponding to each of the selected candidate temperatures, where the time reduction is a reduction amount of the first charging duration relative to the second charging duration; and determining a candidate temperature, with the time reduction greater than a time threshold and the additional energy consumption less than an energy threshold, to be the target temperature.

Furthermore, the preprocessing, based on the target temperature, the battery in response to the battery preprocessing function trigger instruction includes: acquiring a current temperature and a current voltage of the battery, and determining a cooling duration of the battery based on the current temperature, the target temperature, the current voltage, and cooling efficiency of the battery; determining timing of preprocessing activation based on a target time, a current time, and the cooling duration, where the target time is a predicted time when a vehicle reaches the charging station; and preprocessing the battery at the timing of preprocessing activation in response to the battery preprocessing function trigger instruction.

Furthermore, the determining a plurality of first charging durations corresponding to different candidate temperatures to which a battery is preprocessed includes: acquiring maximum power of the charging station; and determining the plurality of first charging durations corresponding to different candidate temperatures when the maximum power is greater than a power threshold corresponding to the battery.

Furthermore, the method further includes: not responding to the battery preprocessing function trigger instruction when no first charging duration is less than the second charging duration.

Furthermore, the first required charging energy is calculated by the following formula: First required charging energy = Rated capacity of battery pack × State of Health (SOH) of battery pack - Current capacity of the battery + Additional energy consumption, where the "Rated capacity of battery pack × State of Health (SOH) of battery pack" determines the maximum capacity of the battery at present; and the "Rated capacity of battery pack × State of Health (SOH) of battery pack - Current capacity of the battery" yields required charging energy for the battery.

Furthermore, the second required charging energy is calculated by the following formula: Second required charging energy = Rated capacity of battery pack × State of Health (SOH) of battery pack - Current capacity of the battery.

Compared to the prior art, the battery preprocessing control method of the present disclosure has the following advantages.

According to the present disclosure, upon receiving a battery preprocessing function trigger instruction, a plurality of first charging durations corresponding to different candidate temperatures to which a battery is preprocessed are determined and a second charging duration corresponding to no preprocessing is determined. Each of the plurality of first charging durations is a charging duration required after cooling the battery to a corresponding candidate temperature. Candidate temperatures satisfying a condition are selected, where the satisfying the condition represents the first charging duration corresponding to the candidate temperature being less than the second charging duration. A target temperature is determined based on the selected candidate temperatures. Based on the target temperature, the battery is preprocessed in response to the battery preprocessing function trigger instruction to reduce temperature of the battery to the target temperature before reaching a charging station. According to the present disclosure, when the battery preprocessing function is activated by a user, charging durations with the preprocessing function enabled and the charging duration with the preprocessing function disabled are determined. The battery preprocessing function is only activated when the charging duration with the preprocessing function enabled is less than the charging duration with the preprocessing function disabled, thereby avoiding problems of an extended charging duration and decreased driving range caused by consumption for reducing charging temperature. Meanwhile, since the battery is cooled in advance when the charging duration with the preprocessing function enabled is less than the charging duration with the preprocessing function disabled, the battery may be cooled down to the target temperature before reaching the charging station, thereby improving charging efficiency.

Another objective of the present disclosure is to propose a battery preprocessing control apparatus to address the problem of low charging efficiency and increased charging time caused by the inability to dissipate residual heat completely during battery charging in high ambient temperatures.

To achieve the aforementioned objectives, the technical solutions of the present disclosure are implemented as follows.

A battery preprocessing control apparatus, includes: a receiving module, configured to receive a battery preprocessing function trigger instruction; a first determination module, configured to determine a plurality of first charging durations corresponding to different candidate temperatures to which a battery is preprocessed, and determine a second charging duration corresponding to no preprocessing, where each of the plurality of first charging durations is a charging duration required after cooling the battery to a corresponding candidate temperature; a selecting module, configured to select candidate temperatures satisfying a condition, where the satisfying the condition represents the first charging duration corresponding to the candidate temperature being less than the second charging duration; a second determination module, configured to determine a target temperature based on the selected candidate temperatures; and a control module, configured to preprocess, based on the target temperature, the battery in response to the battery preprocessing function trigger instruction to reduce temperature of the battery to the target temperature before reaching a charging station.

Compared to the prior art, advantages of the battery preprocessing control apparatus are the same as the advantages of the aforementioned method, and will not be described herein again.

Another objective of the present disclosure is to propose a vehicle to address the problem of low charging efficiency and increased charging time caused by the inability to dissipate residual heat completely during battery charging in high ambient temperatures.

To achieve the aforementioned objectives, the technical solutions of the present disclosure are implemented as follows.

A vehicle, includes: a control unit, where the control unit is configured to implement the aforementioned battery preprocessing control method.

Compared to the prior art, advantages of the vehicle are the same as the advantages of the aforementioned battery preprocessing control method, and will not be described herein again.

Another objective of the present disclosure is to propose a computing processing device, including: a memory, configured to store computer-readable code; and one or more processors, where when the computer-readable code is executed by the processor, the computing processing device is configured to implement the battery preprocessing control method according to any one of above embodiments.

Another objective of the present disclosure is to propose a computer program, including computer-readable code, where when the computer-readable code is executed on a computing processing device, the computing processing device is configured to implement the battery preprocessing control method according to any one of above embodiments.

Another objective of the present disclosure is to propose a computer-readable storage medium, on which the computer program according to above embodiment is stored.

### BRIEF DESCRIPTION OF THE DRAWINGS

FIG. 1 is a flowchart of a battery preprocessing control method according to a first embodiment of the present disclosure.
FIG. 2 is a flowchart of a battery preprocessing control method according to another embodiment of the present disclosure.
FIG. 3 is a logic diagram of a battery preprocessing control method according to another embodiment of the present disclosure.
FIG. 4 is a schematic diagram of changes in temperature of battery, power consumption, and SOC of battery over time during vehicle operation according to another embodiment of the present disclosure.
FIG. 5 is a structural schematic diagram of a battery preprocessing control apparatus according to a second embodiment of the present disclosure.
FIG. 6 is a block diagram of a computing processing device for executing the method according to the present disclosure.
FIG. 7 schematically illustrates a storage unit for retaining or carrying program code for implementing the method according to the present disclosure.

### DETAILED DESCRIPTION OF THE EMBODIMENTS

It should be noted that embodiments and features in the present disclosure can be combined with each other without conflict.

A battery preprocessing control method and apparatus, and a vehicle according to the present disclosure will be described in detail with reference to the accompanying drawings and in conjunction with specific embodiments in the following.

### Embodiment 1

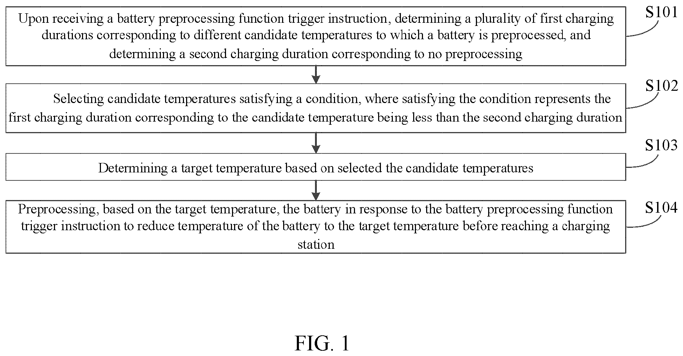

Referring to FIG. 1, FIG. 1 is a flowchart of a battery preprocessing control method according to a first embodiment of the present disclosure. As shown in FIG. 1, the method includes the following steps.

S101: upon receiving a battery preprocessing function trigger instruction, determining a plurality of first charging durations corresponding to different candidate temperatures to which a battery is preprocessed, and determining a second charging duration corresponding to no preprocessing.

If a battery cooling system is activated in advance to pre-cool the battery, remaining driving range of the vehicle will be inevitably reduced. Therefore, a reminder may be set in advance to inform users of advantages and disadvantages of enabling the battery preprocessing function when the battery preprocessing function is activated by a user. For example, when the battery preprocessing function is activated, Heads-Up Display system may be configured to show that activating the battery preprocessing function will shorten charging time but reduce the driving range. Specific display method is not limited by the present disclosure.

In actual implementation, a portion of energy is inevitably consumed if the battery is cooled in advance, thereby increasing the amount of energy required for charging. Although charging efficiency is improved, overall charging time may not be shorter than charging duration corresponding to no preprocessing. Therefore, when the user activates the battery preprocessing function, it is necessary to first determine both a charging duration with preprocessing and a charging duration without preprocessing to determine a size relationship between the charging durations. Further, based on the size relationship between the charging durations, it is determined whether to activate the battery preprocessing function.

S102: selecting candidate temperatures satisfying a condition, where satisfying the condition represents the first charging duration corresponding to the candidate temperature being less than the second charging duration.

After the first charging durations and the second charging duration are determined in the aforementioned step, the plurality of first charging durations and the second charging duration are compared to determine if there is a first charging duration less than the second charging duration. If a first charging duration is found to be less than the second charging duration, it indicates that the charging time may be shorten by cooling the battery, thereby improving the charging efficiency.

S103: determining a target temperature based on the selected candidate temperatures.

Since there may be several selected candidate temperatures, it is necessary to determine a target temperature from the selected candidate temperatures. That is, the target temperature need to be determined from candidate temperatures corresponding to which the first charging duration is less than the second charging duration. In other words, the target temperature is a temperature to which the battery will ultimately be cooled. In the process of determining the target temperature, a candidate temperature corresponding to a shortest charging duration may be considered as the target temperature. Alternatively, taking into account both charging duration and driving range, a candidate temperature with a relatively short charging duration and a smaller reduction in driving range may be selected as the target temperature, which is not specifically limited in the present disclosure.

S104: preprocessing, based on the target temperature, the battery in response to the battery preprocessing function trigger instruction to reduce temperature of the battery to the target temperature before reaching a charging station.

Once the target temperature is determined, timing for activating the battery preprocessing function may be determined, so that the preprocessing of the battery may be activated before reaching the charging station, thereby ensuring that the battery is cooled to an optimal temperature upon arrival and is charged at an optimal temperature. When the activation of the battery preprocessing function is determined, a display interface may be configured to show that the battery preprocessing function has been activated in response to a trigger instruction from the user.

In this embodiment of the present disclosure, upon receiving a preprocessing instruction for the battery, the charging duration with the battery preprocessing function enabled is compared with the charging duration without the battery preprocessing function enabled. The battery is cooled in advance only when the charging duration with the preprocessing function enabled is less than the charging duration without the preprocessing function enabled, thereby avoiding a problem of extended charging time and reduced driving range caused by preprocessing on the battery in advance. Meanwhile, since the battery is cooled in advance in the corresponding situation, the battery may be charged at higher charging efficiency, thereby shortening the charging time.

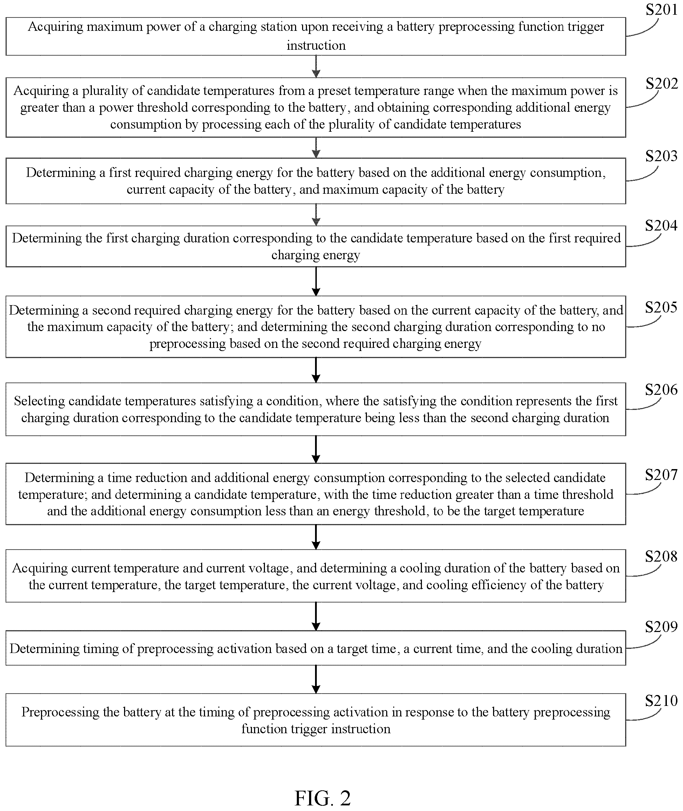

Referring to FIG. 2, FIG. 2 is a flowchart of a battery preprocessing control method according to another embodiment of the present disclosure. As shown in FIG. 2, the battery preprocessing control method includes the following steps.

S201: acquiring maximum power of a charging station upon receiving a battery preprocessing function trigger instruction.

In this embodiment of the present disclosure, when the battery preprocessing function trigger instruction from the user is received, it indicates that the user is preparing to head to the charging station for battery charging. Therefore, the maximum power of the charging station at the navigation destination maybe detected, that is, the maximum power of the charging station for charging the battery. This step is performed as a low charging power may result in long charging time of the battery which is related to a charging power. Meanwhile the charging power is related to the maximum power of the charging station.

S202: acquiring a plurality of candidate temperatures from a preset temperature range when the maximum power is greater than a power threshold corresponding to the battery, and obtaining corresponding additional energy consumption by processing each of the plurality of candidate temperatures.

The power threshold corresponding to the battery may be a pre-calibrated value based on performance of the battery. When the maximum power of the charging station is greater than the power threshold, it indicates that the maximum power of the charging station is close to rated power of the battery, allowing for faster charging. When the maximum power is less than the power threshold, it indicates that the maximum power of the charging station is lower than the rated power of the battery, and the difference is relatively large.

When the maximum power of the charging station is significantly less than the rated power of the battery, the charging power of the battery is low. Regardless of whether the battery is preprocessed, the charging time will be long, and the preprocessing also requires additional energy consumption. Therefore, when it is detected that the maximum power of the charging station is less than or equal to the power threshold corresponding to the battery, preprocessing of the battery is not performed. In some embodiments, when it is detected that the maximum power of the charging station at the current destination is less than or equal to the power threshold corresponding to the battery, a reminder may be provided to the user that the charging station power is low and the charging time will be long.

When the maximum power of the charging station is greater than the power threshold corresponding to the battery, it indicates that the battery may be charged at higher power by the charging station. However, charging at higher power may lead to a decrease in charging efficiency and longer charging time due to reduced charging power in high temperature of the battery. Therefore, at this point, a current temperature of the battery is acquired to determine whether a situation of ultra high temperature during charging is likely to occur.

In other embodiments, the maximum power, maximum current, and maximum voltage of the charging station may be acquired. These three values may be used to assess the charging power of the charging station. When the maximum power, the maximum current, and the maximum voltage of the charging station are all greater than thresholds, the current temperature of the battery is acquired to ensure the charging power of the charging station being high, so that the battery may be charged quickly.

The preset temperature range is an optimal charging temperature range set based on the performance of the battery. Within the preset temperature range, the battery achieves higher charging efficiency. Therefore, by determining candidate temperatures from the preset temperature range, the selected candidate temperatures are all temperatures with higher charging efficiency, so that charging durations for the battery are relatively short. The selection of candidate temperatures may be determined according to a specific temperature gradient within the preset temperature range. For example, if the preset temperature range is from 10°C to 30°C and it is determined that the charging time varies when the temperature changes by 10°C, then candidate temperatures may be selected at a gradient of 10°C, such as 10°C, 20°C, and 30°C. Alternatively, the candidate temperatures may be predicted based on the current battery performance. The specific candidate temperatures are determined according to actual conditions, which will not be specifically limited in the present disclosure.

When it is determined that the maximum power of the charging station meets charging requirements of the battery, the additional energy consumption corresponding to each candidate temperature is calculated based on discharge power of the battery at the candidate temperatures within the preset temperature range, driving energy consumption of the vehicle, and an ambient temperature. The additional energy consumption represents energy consumed by cooling the battery in advance when the battery preprocessing function is activated.

S203: determining a first required charging energy for the battery based on the additional energy consumption, current capacity of the battery, and maximum capacity of the battery.

Specifically, the first required charging energy corresponding to each candidate temperature is calculated based on the additional energy consumption corresponding to each candidate temperature by the following formula. First required charging energy = Rated capacity of battery pack × State of Health (SOH) of battery pack - Current capacity of battery pack + Additional energy consumption. The "Rated capacity of battery pack × State of Health (SOH) of battery pack" determines the maximum capacity of the battery at present, and the "Rated capacity of battery pack × State of Health (SOH) of battery pack - Current capacity of battery pack" yields required charging energy for the battery. Therein, "x" denotes multiplication, "-" denotes subtraction, and "+" denotes addition.

S204: determining the first charging duration corresponding to the candidate temperature based on the first required charging energy.

After calculating the first required charging energy corresponding to each candidate temperature, the first charging duration is determined based on the first required charging energy corresponding to each candidate temperature. At this point, the charging duration is jointly determined by the maximum power of the charging station, the first required charging energy, and the current State of Charge (SOC) of the battery and a target SOC of the battery. The required charging energy represents the energy needed to fully charge the battery. However, actual charging energy may be set according to user preferences during the charging process. Therefore, it is necessary to determine desired charging energy of the user based on the current SOC of the battery and the target SOC of the battery. The actual required charging energy may be determined based on the desired charging energy, and then the charging duration is determined.

S205: determining a second required charging energy for the battery based on the current capacity of the battery, and the maximum capacity of the battery; and determining the second charging duration corresponding to no preprocessing based on the second required charging energy.

When the first charging duration is determined, it is also necessary to determine another charging duration, namely the second charging duration. The second charging duration represents time required for charging without activating the preprocessing function. Since there may be instances where the first charging durations corresponding to the plurality of candidate temperatures are all greater than the second charging duration. In such cases, preprocessing the battery would actually result in a longer charging time, and consume additional energy, thereby reducing the driving range. Therefore, it is essential to determine size relationships between the first charging durations corresponding to the plurality of candidate temperatures and the second charging duration to determine whether to activate the battery cooling function in advance.

Specifically, similar to the calculation method in the aforementioned step S203, since the battery preprocessing function is not activated, there is no additional energy consumption. Therefore, the second required charging energy without the battery preprocessing function enabled is calculated by the following formula. Second required charging energy = Rated capacity of battery pack × State of Health (SOH) of battery pack - Current capacity of battery pack, where "×" denotes multiplication, "-" denotes subtraction, and "+" denotes addition.

When the second required charging energy is determined, the second charging duration may be calculated based on the maximum power of the charging station, the second required charging energy, the current SOC of the battery and target SOC of the battery.

In the embodiment of the present disclosure, timing for calculating the first charging duration and second charging duration is not specifically limited. The plurality of first charging durations may be calculated first before calculating the second charging duration, or both the second charging duration and the first charging durations may be calculated simultaneously, which is not specifically limited in the present disclosure.

S206: selecting candidate temperatures satisfying a condition, where the satisfying the condition represents the first charging duration corresponding to the candidate temperature being less than the second charging duration.

In the embodiment of the present disclosure, when some or all of the first charging durations are less than the second charging duration, it indicates that activating the battery cooling function in advance may reduce the charging time and improve the charging efficiency. In other words, only when the first charging duration is less than the second charging duration, the charging time may be reduced and the charging efficiency may be improved at the charging temperature corresponding to the first charging duration. At this point, the battery preprocessing function may be activated.

For example, when the target temperature is determined to be 10°C, the first charging duration is determined to be 2 hours and 10 minutes. When the target temperature is determined to be 20°C, the first charging duration is determined to be 2 hours and 40 minutes. When the target temperature is determined to be 30°C, the first charging duration is determined to be 2 hours and 20 minutes. Meanwhile, the second charging duration without activating the battery cooling function in advance is determined to be 2 hours and 30 minutes. This indicates that there is a first charging duration less than the second charging duration, then the battery preprocessing function may be determined to be activated.

If it is determined that the first charging durations are all greater than or equal to the second charging duration, it indicates that activating the battery cooling function in advance may not shorten or may even prolong the charging time, and the driving range of the vehicle may also be reduced at the same time. Therefore, there is no need to activate the battery preprocessing function.

For example, when the target temperature is determined to be 10°C, the first charging duration is determined to be 2 hours and 10 minutes. When the target temperature is determined to be 20°C, the first charging duration is determined to be 2 hours and 40 minutes, When the target temperature is determined to be 30°C, the first charging duration is determined to be 2 hours and 20 minutes. Meanwhile, the second charging duration without activating the battery cooling function in advance is determined to be 2 hours. This indicates that all first charging durations are greater than the second charging duration. In this case, activating the battery cooling function in advance will not shorten the charging time but will reduce the driving range of the vehicle. Therefore, it is not necessary to activate the battery cooling function in advance.

S207: determining a time reduction and additional energy consumption corresponding to the selected candidate temperature; and determining a candidate temperature, with the time reduction greater than a time threshold and the additional energy consumption less than an energy threshold, to be the target temperature.

When comparing charging durations, it is possible that more than one candidate temperature may be selected. Therefore, in practical application, it is necessary to determine a current optimal charging temperature. According to the embodiment of the present disclosure, the reduction amount of charging duration and the additional energy consumption are used as indicators to determine the optimal temperature. A candidate temperature with a longer reduction amount of charging duration and lower additional energy consumption are determined to be the target temperature.

Specifically, after the first charging durations that are less than the second charging duration are determined, the target temperature is determined by comprehensively assessing the additional energy consumption and the charging duration. First, it is determined whether the time reduction of the first charging duration, that is, a reduction amount of the first charging duration relative to the second charging duration, is greater than the time threshold. Then, it is determined whether the additional energy consumption is less than the energy threshold. Further, the candidate temperature, that meets both conditions in terms of the time reduction of the first charging duration and additional energy consumption, is set as the target temperature. For example, if the time threshold is set to be 20 minutes and the energy threshold is set to be 0.3 kWh, Then, a candidate temperature with a time reduction greater than 20 minutes and additional energy consumption less than 0.3 kWh is set to be the target temperature.

Typically, based on reasonable time threshold and energy threshold, there is only one candidate temperature that meets both thresholds simultaneously. However, if none of the candidate temperatures satisfy the thresholds, it indicates that although the charging duration may be reduced by cooling the battery to the target temperature, the reduction may be minimal, and the additional energy consumption may be significant. In comparison to that the battery preprocessing function is not activated, there is no notable shortening of the charging duration of the vehicle, and instead, the driving range of the vehicle is reduced.

However, when there are different time thresholds and energy thresholds, it is possible to select several candidate temperatures that meet the aforementioned condition. In the case where several candidate temperatures satisfy the condition, a random selection may be made among them. Alternatively, a reduction percentage in time and a reduction percentage in driving range may be determined based on reduced amount of charging duration of the battery and reduced amount of driving range. When the reduction percentage in time is greater than the reduction percentage in driving range, the corresponding candidate temperature is determined to be the target temperature, which is not specifically limited.

S208: acquiring current temperature and current voltage of the battery, and determining a cooling duration of the battery based on the current temperature, the target temperature, the current voltage, and cooling efficiency of the battery.

Specifically, based on the determined target temperature, the current temperature and the current voltage of the battery, and the cooling efficiency of a compressor, the corresponding cooling duration may be pre-calibrated or calculated, which is not specifically limited.

In other embodiments, when calculating the charging durations corresponding to candidate temperatures, the cooling durations are simultaneously calculated, so that time for executing the cooling function is also included in evaluation for determining the target temperature. Consequently, the finally obtained target temperature is the candidate temperature with lower additional energy consumption, shorter duration for executing the cooling function, and shorter charging duration.

S209: determining timing of preprocessing activation based on a target time, a current time, and the cooling duration.

In the embodiment of the present disclosure, to ensure that the battery reaches the target temperature exactly when reaching the charging station, it is necessary to determine the activation timing of the preprocessing function, so that it may be avoided that the preprocessing of the battery is activated directly when it is determined and the target temperature may be reached before arriving at the charging station, resulting in unnecessary energy consumption. After obtaining an interval duration and the cooling duration, a specific timing for activation of the cooling function may be determined combined with the current time.

The timing of preprocessing activation is determined based on the target time, the current time, and the cooling duration. Therein, the current time represents time when the user triggers the activation instruction of battery preprocessing, and the target time represents predicted arrival time of the vehicle at the charging station.

For example, when the current time is determined to be 16:00, the predicted arrival time at the target charging station is determined to be 16:40, and the interval duration is determined to be 40 minutes. The cooling duration is determined based on Step S208. For example, the cooling duration may be 20 minutes. Therefore, the timing to activate the cooling function may be determined to be 16:20. The cooling function may be activated to cool the battery at 16:20.

S210: preprocessing the battery at the timing of preprocessing activation in response to the battery preprocessing function trigger instruction.

Specifically, after determining the timing of preprocessing activation in aforementioned Step S209, when the timing of preprocessing activation is reached, the preprocessing function is activated to cool the battery, so that the temperature of the battery reaches the target temperature precisely when the vehicle reaches the charging station.

After the specific timing for activation of the cooling function is determined, the battery cooling function may be activated at the timing of preprocessing activation to activate the cooling function to perform preprocessing to the battery, so that when the vehicle reaches the charging station, the temperature of the battery reaches the target temperature precisely, allowing the battery to be charged at the target temperature and thereby improving the charging efficiency.

It should be noted that executing entities for the steps mentioned in the present disclosure, such as S101, S102, S103, S104, S201, S202, S203, S204, S205, S206, S207, S208, S209, and S210, are one or more processors.

In the embodiment of the present disclosure, upon receiving a battery preprocessing function trigger instruction, a maximum power of the charging station is acquired. When the maximum power of the charging station is greater than a power threshold corresponding to the battery, it is determined that a precondition for activation of the preprocessing function is met. Subsequently, a plurality of first charging durations corresponding to situations where the battery is preprocessed and a second charging duration without activating the battery cooling function in advance are determined. When there is a first charging duration that is less than the second charging duration, a target temperature is determined based on additional energy consumption and the first charging duration that is less than the second charging duration. An activation timing for the battery cooling function is then determined based on the target temperature. The battery cooling process begins at the activation timing, so that when the vehicle arrives at the charging station, the temperature of the battery reaches the target temperature, allowing the battery to be charged at an optimal temperature and thereby avoiding problems such as low charging efficiency and long charging time due to incomplete dissipation of battery residual heat. Meanwhile, by comparing the second charging duration without activating the battery cooling function in advance with the first charging durations with activating the battery cooling function in advance, when all the first charging durations are greater than the second charging duration, battery cooling is not performed in advance, so that battery preprocessing is only activated when necessary, thereby avoiding unnecessary loss of driving range.

In the following, the battery preprocessing control method of the present disclosure will be described in detail with reference to a specific example.

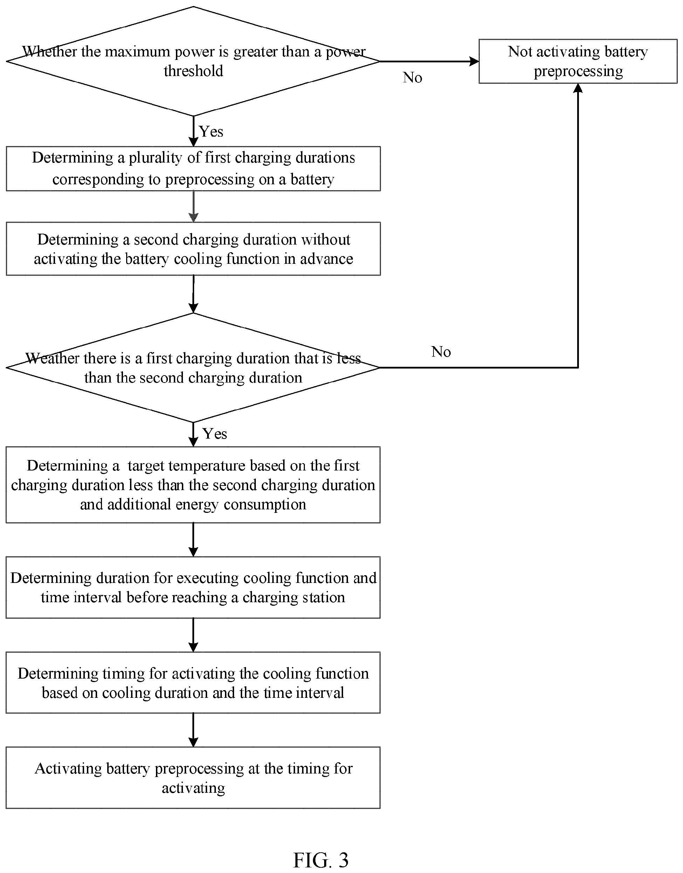

Referring to FIG. 3, FIG. 3 is a logic diagram of a battery preprocessing control method according to another embodiment of the present disclosure. As shown in FIG. 3, during specific implementation, first, when the user triggers the battery preprocessing function, that is, when a preprocessing instruction for the battery is detected, it indicates that the user is already on the way to the charging station. Subsequently, the maximum power of the destination charging station is acquired to determine whether the maximum power is greater than a power threshold. If the maximum power is greater than the power threshold, it indicates that the destination charging station meets the charging requirement for activating the battery cooling function in advance. However, if the maximum power is less than the power threshold, it indicates that the destination charging station cannot meet the charging requirement for activating the battery cooling function in advance. In this case, the user is reminded that battery preprocessing cannot be performed.

Next, a plurality of candidate temperatures are determined from a preset temperature range. For example, the preset temperature range may be set to range from 15°C to 35°C. Based on a temperature gradient of 2°C, the candidate temperatures are determined to include 15°C, 17°C, 19°C, 21°C, 23°C, 25°C, 27°C, 29°C, 31°C, 33°C, and 35°C. After the candidate temperatures are determined, a first charging duration corresponding to each candidate temperature is determined based on the candidate temperature, a current temperature of the battery, and the power of the charging station. Meanwhile, a second charging duration without activating the battery cooling function in advance is also determined.

A specific process for determining the charging duration is as follows: calculating additional energy consumption corresponding to each candidate temperature based on the candidate temperature, the target temperature, discharge power of the battery, and average energy consumption during driving, where the additional energy consumption specifically represents the energy consumed by cooling function activated in advance; determining required charging energy based on the additional energy consumption, current capacity of the battery, and current maximum capacity of the battery, where the required charging energy represents the energy needed to fully charge the battery; and after the required charging energy is determined, determining the first charging duration corresponding to preprocessing on the battery based on the required charging energy, current SOC of the battery, target SOC of the battery, and the maximum power of the charging station.

Meanwhile, the second charging duration without preprocessing the battery is determined using a comparable method. However, since the battery cooling function is not activated in advance, there is no additional energy consumption. Therefore, the required charging energy is directly determined based on the current capacity of the battery and the current maximum capacity of the battery. Subsequently, the charging duration without activating the battery cooling function in advance is determined based on the required charging energy, current SOC of the battery, target SOC of the battery, and the maximum power of the charging station.

By comparing the two charging durations, whether to cool the battery in advance may be further determined. If all the first charging durations are greater than the second charging duration, it indicates that cooling the battery in advance may not shorten the charging time and there is no need to cool the battery in advance. However, if there is a first charging duration that is less than the second charging duration, it indicates that cooling the battery in advance may save charging time. Then the target temperature is determined based on the first charging duration less than the second charging duration and the additional energy consumption. Specifically, the candidate temperature with a largest reduction amount of charging time and a lowest additional energy consumption may be selected. Alternatively, thresholds for the reduction amount of charging time and additional energy consumption may be set to determine if the reduction amount of charging time is greater than a threshold of reduction amount in charging time and if the additional energy consumption is less than a threshold of additional energy consumption.

After the target temperature is determined, the duration required for cooling the battery from the current temperature to the target temperature is calculated based on the target temperature, the current temperature and voltage of the battery, the maximum power of the charging station, and cooling efficiency of the compressor. Simultaneously, target time to reach the charging station from the current location is determined. Based on the current time and the target time, a specific timing to activate the battery cooling function is determined, so that the cooling function is activated at that timing, ensuring that when the vehicle arrives at the charging station, the temperature of the battery reaches the target temperature precisely.

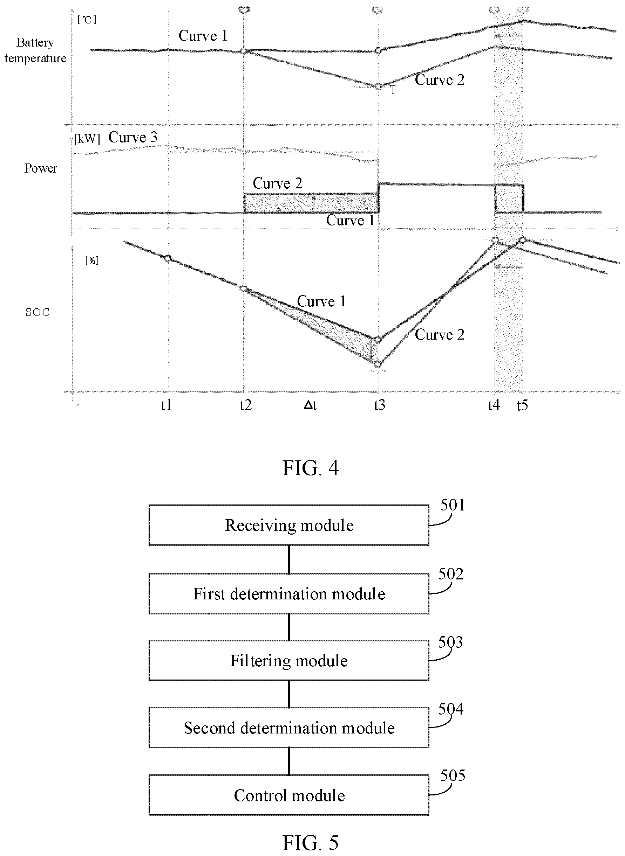

During this process, changes of battery temperature, power consumption of a vehicle, and the SOC of the battery are illustrated in FIG. 4. Curve 1 represents a scenario where the battery cooling function is not activated in advance, Curve 2 represents a scenario where the battery cooling function is activated in advance, and Curve 3 represents the power consumption of the vehicle during driving.

At timing t1, a charging need of a battery is detected, and a navigation destination is set to a charging station. At this point, a target temperature T is determined, a duration Δt for executing the cooling function is determined, and a timing t2 for activating the cooling function is determined. When it comes to timing t2 during driving of the vehicle, the battery cooling function is activated. As shown in FIG. 4, at this moment, in comparison to the scenario where the cooling function is not activated, the battery temperature begins to gradually decrease, the power consumption of the vehicle increases, and the SOC of the battery also significantly decreases. At timing t3, when the vehicle reaches the charging station, the battery temperature has been cooled to the target temperature T. In both scenarios, the power consumption increases to prevent the temperature from rising too quickly during charging, but the SOC of the battery is lower in the case where the cooling function was executed in advance.

During a period from t3 to t4, which is a process from the start of charging until the SOC of the battery of Curve 2 reaches the target SOC of the battery, it is evident from the SOC curve that Curve 2 has a steeper slope, indicating a higher charging efficiency. At timing t4, Curve 2 has already reached the target SOC of the battery, while Curve 1 reaches the target SOC at timing t5, taking longer time compared to Curve 2. FIG. 4 demonstrates that by adopting the battery preprocessing control method of the present disclosure, the battery charging time may be significantly shorten when the battery is cooled before reaching the charging station and the target battery temperature is reached upon reaching the charging station, thereby improving charging efficiency, shortening the charging process, and optimizing user experience.

### Embodiment 2

Referring to FIG. 5, FIG. 5 is a structural schematic diagram of a battery preprocessing control apparatus according to a second embodiment of the present disclosure. As shown in FIG. 5, the battery preprocessing control apparatus includes:
a receiving module (receiver) 501, configured to receive a battery preprocessing function trigger instruction;
a first determination module (first determination processor) 502, configured to determine a plurality of first charging durations corresponding to different candidate temperatures to which a battery is preprocessed, and determine a second charging duration corresponding to no preprocessing, where each of the plurality of first charging durations is a charging duration required after cooling the battery to a corresponding candidate temperature;
a selecting module (filter) 503, configured to select candidate temperatures satisfying a condition, where satisfying the condition represents the first charging duration corresponding to the candidate temperature being less than the second charging duration;
a second determination module (second determination processor) 504, configured to determine a target temperature based on the selected candidate temperatures; and
a control module (Controller) 505, configured to preprocess, based on the target temperature, the battery in response to the battery preprocessing function trigger instruction to reduce temperature of the battery to the target temperature before reaching a charging station.

Based on the same inventive concept, the embodiment of the present disclosure also provides a vehicle, including: a control unit, where the control unit is configured to perform the battery preprocessing control method according to any one of above embodiments.

Another objective of the present disclosure is to propose a computing processing device, including: a memory, configured to store computer-readable code of the processor; and one or more processors, where when the computer-readable code is executed by the processor, the computing processing device is configured to implement the battery preprocessing control method according to any one of above embodiments.

Another objective of the present disclosure is to propose a computer program, including computer-readable code, where when the computer-readable code is executed on a computing processing device, the computing processing device is configured to implement the battery preprocessing control method according to any one of above embodiments.

Another objective of the present disclosure is to propose a computer-readable storage medium, on which the computer program according to above embodiment is stored.

The various component embodiments of the present disclosure can be implemented in hardware, as software modules running on one or more processors, or as a combination thereof. Those skilled in the art should understand that microprocessors or digital signal processors (DSPs) can be used in practice to implement some or all of the functions of some or all of the components in the computing processing devices according to the embodiments of the present disclosure. The present disclosure can also be implemented as a device or apparatus program (e.g., computer programs and computer program products) for executing some or all of the methods described herein. Such programs implementing the present disclosure can be stored on computer-readable media, or can be in the form of one or more signals. Such signals can be downloaded from Internet websites, provided on carrier signals, or provided in any other form.

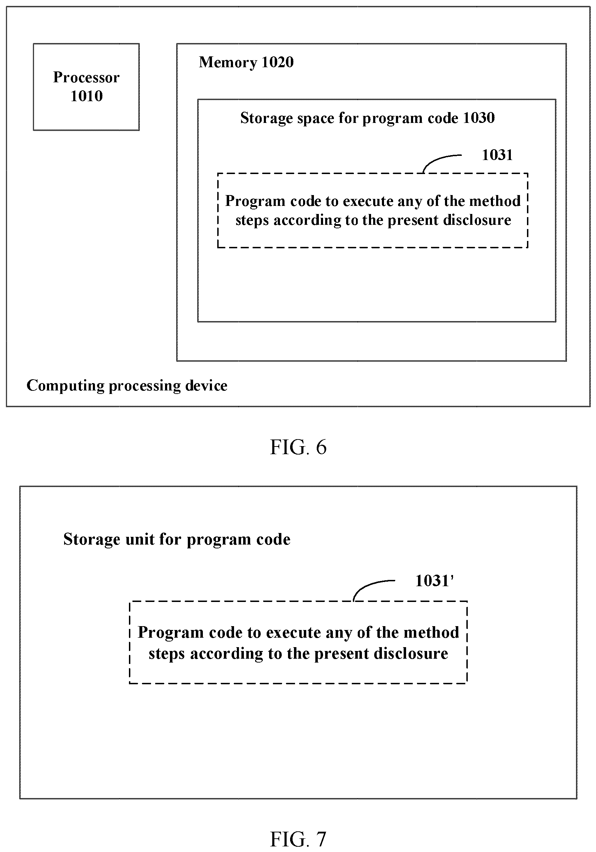

For example, FIG. 6 illustrates a computing processing device that can implement the method according to the present disclosure. The computing processing device traditionally includes a processor 1010 and a computer program product or computer-readable medium in the form of memory 1020. The memory 1020 can be an electronic memory such as flash memory, EEPROM (Electrically Erasable Programmable Read-Only Memory), EPROM, a hard disk, or ROM. The memory 1020 has a storage space 1030 for executing program code 1031 corresponding to any of the method steps described above. For example, the storage space 1030 for program code may include program codes 1031 for implementing various steps in the above method respectively. These program codes can be read from or written to one or more computer program products. These computer program products include program code carriers such as hard disks, compact discs (CDs), memory cards, or floppy disks. Such computer program products are typically portable or fixed storage units, as referenced in FIG. 7. The storage unit may have storage segments, storage spaces, etc., arranged similarly to the memory 1020 in the computing processing device of FIG. 6. The program code may be compressed, for example, in an appropriate form. Generally, the storage unit includes computer-readable code 1031', that is, code that can be read by a processor such as processor 1010. When the program code are executed by the computing processing device, the computing processing device may be controlled to perform the respective steps in the methods described above.

The above descriptions are merely preferred embodiments of the present disclosure and are not intended to limit it. Any modifications, equivalent substitutions, improvements, etc., made within the spirit and principles of the present disclosure should be included within the protection scope of the present disclosure.

For the method embodiments, for simplicity of description, they are all expressed as a series of action combinations. However, those skilled in the art should be aware that the present disclosure is not limited by the described order of actions, because according to the present disclosure, certain steps can be performed in other orders or simultaneously. Secondly, those skilled in the art should also be aware that the embodiments described in the specification are all preferred embodiments, and the actions and components involved are not necessarily required by the present disclosure.

The above provides a detailed introduction to a method and apparatus for battery preprocessing control, and a vehicle provided by the present disclosure. Specific examples are used in this specification to elucidate the principles and implementation methods of the present disclosure. The descriptions of the above embodiments are only intended to help understand the method and its core idea of the present disclosure. Meanwhile, for those skilled in the art, based on the idea of the present disclosure, there will be variations in specific implementation methods and application scopes. In summary, the content of this specification shall not be construed as restricting the present disclosure.

## Claims

1. A battery preprocessing control method, comprising:
upon receiving a battery preprocessing function trigger instruction, determining (S101) a plurality of first charging durations corresponding to different candidate temperatures to which a battery is preprocessed, and determining a second charging duration corresponding to no preprocessing, wherein each of the plurality of first charging durations is a charging duration required after cooling the battery to a corresponding candidate temperature;
selecting (S102) candidate temperatures satisfying a condition, wherein the satisfying the condition represents the first charging duration corresponding to the candidate temperature being less than the second charging duration;
determining (S103) a target temperature based on the selected candidate temperatures; and
preprocessing (S104), based on the target temperature, the battery in response to the battery preprocessing function trigger instruction to reduce temperature of the battery to the target temperature before reaching a charging station.

2. The method according to claim 1, wherein the determining (S101) a plurality of first charging durations corresponding to different candidate temperatures to which a battery is preprocessed comprises:
acquiring (S202) a plurality of candidate temperatures from a preset temperature range, and performing following processes for each of the plurality of candidate temperatures:
determining (S202) additional energy consumption corresponding to the candidate temperature based on the candidate temperature, discharge power of the battery, driving energy consumption rate of a vehicle, and ambient temperature;
determining (S203) a first required charging energy for the battery based on the additional energy consumption, current capacity of the battery, and maximum capacity of the battery; and
determining (S204) the first charging duration corresponding to the candidate temperature based on the first required charging energy and charging station parameters, wherein the charging station parameters comprise: location of the charging station and charging power of the charging station.

3. The method according to claim 1, wherein the determining (S101) a second charging duration corresponding to no preprocessing comprises:
determining (S205) a second required charging energy for the battery based on current capacity of the battery, and maximum capacity of the battery; and
determining (S205) the second charging duration corresponding to no preprocessing based on the second required charging energy and charging station parameters, wherein the charging station parameters comprise: location of the charging station and charging power of the charging station.

4. The method according to claim 2, wherein the determining (S103) a target temperature based on the selected candidate temperatures comprises:
determining (S207) a time reduction and the additional energy consumption corresponding to each of the selected candidate temperatures, wherein the time reduction is a reduction amount of the first charging duration relative to the second charging duration; and
determining (S207) a candidate temperature, with the time reduction greater than a time threshold and the additional energy consumption less than an energy threshold, to be the target temperature.

5. The method according to claim 1, wherein the (S104) preprocessing, based on the target temperature, the battery in response to the battery preprocessing function trigger instruction comprises:
acquiring (S208) a current temperature and a current voltage of the battery, and determining a cooling duration of the battery based on the current temperature, the target temperature, the current voltage, and cooling efficiency of the battery;
determining (S209) timing of preprocessing activation based on a target time, a current time, and the cooling duration, wherein the target time is a predicted time when a vehicle reaches the charging station; and
preprocessing (S210) the battery at the timing of preprocessing activation in response to the battery preprocessing function trigger instruction.

6. The method according to claim 1, wherein the determining (S101) a plurality of first charging durations corresponding to different candidate temperatures to which a battery is preprocessed comprises:
acquiring (S201) maximum power of the charging station; and
determining the plurality of first charging durations corresponding to different candidate temperatures when the maximum power is greater than a power threshold corresponding to the battery.

7. The method according to claim 1, further comprising:
not responding to the battery preprocessing function trigger instruction when no first charging duration is less than the second charging duration.

8. The method according to claim 2, wherein the first required charging energy is calculated by the following formula: First required charging energy = Rated capacity of battery pack × State of Health (SOH) of battery pack - Current capacity of the battery + Additional energy consumption,
wherein the "Rated capacity of battery pack × State of Health (SOH) of battery pack" determines the maximum capacity of the battery at present; and the "Rated capacity of battery pack × State of Health (SOH) of battery pack - Current capacity of the battery" yields required charging energy for the battery.

9. The method according to claim 3, wherein the second required charging energy is calculated by the following formula: Second required charging energy = Rated capacity of battery pack × State of Health (SOH) of battery pack - Current capacity of the battery.

10. A battery preprocessing control apparatus, comprising:
a receiving module (501), configured to receive a battery preprocessing function trigger instruction;
a first determination module (502), configured to determine a plurality of first charging durations corresponding to different candidate temperatures to which a battery is preprocessed, and determine a second charging duration corresponding to no preprocessing, wherein each of the plurality of first charging durations is a charging duration required after cooling the battery to a corresponding candidate temperature;
a selecting module (503), configured to select candidate temperatures satisfying a condition, wherein the satisfying the condition represents the first charging duration corresponding to the candidate temperature being less than the second charging duration;
a second determination module (504), configured to determine a target temperature based on the selected candidate temperatures; and
a control module (505), configured to preprocess, based on the target temperature, the battery in response to the battery preprocessing function trigger instruction to reduce temperature of the battery to the target temperature before reaching a charging station.

11. A vehicle, comprising: a control unit, wherein the control unit is configured to implement the battery preprocessing control method according to any one of claims 1 to 9.

12. A computing processing device, comprising:
a memory (1020), configured to store computer-readable code (1031); and
one or more processors (1010), wherein when the computer-readable code is executed by the processor, the computing processing device is configured to implement the battery preprocessing control method according to any one of claims 1 to 9.

13. A computer program, comprising computer-readable code (1031), wherein when the computer-readable code is executed on a computing processing device, the computing processing device is configured to implement the battery preprocessing control method according to any one of claims 1 to 9.

14. A computer-readable storage medium, on which the computer program according to claim 13 is stored.
